# EUROPÄISCHE PATENTANMELDUNG

(11) **EP 3 173 160 A1**
(43) Veröffentlichungstag der Anmeldung: **31.05.2017**
(21) Anmeldenummer: 16200212.5
(22) Anmeldetag: 23.11.2016
(51) Int. Cl.: B08B 3/02, B60P 3/14, B60K 17/28, B60K 25/06, F02G 5/00, F02B 53/14, F25B 27/00

(54) **MOBILE HOCHDRUCK-REINIGUNGSVORRICHTUNG MIT WÄRMEÜBERTRAGERN**

(30) Priorität: 25.11.2015 DE 102015120418
(71) Anmelder: Buchen Umweltservice GmbH, 50735 Köln (DE)
(72) Erfinder: Haag, Uwe, 64572 Büttelborn (DE); NOACK, Jens, 50374 Erftstadt (DE)
(74) Vertreter: Patentanwälte Bauer Vorberg Kayser

(57) **Zusammenfassung**

Die mobile Hochdruck-Reinigungsvorrichtung mit einem LKW (38), der einen Verbrennungsmotor (36) mit Kühlmittelkreislauf und Abgasleitung, mit einer Hochdruckpumpe (48), die über eine schaltbare Übertragungsvorrichtung in Antriebsverbindung mit dem Verbrennungsmotor (36) ist, hat eine Wasseranlage, die einen Eingangsbereich und einen warmen Ausgangsbereich aufweist, zwischen denen angeordnet sind a) eine Leitung (28) für Wasser, b) ein Wärmeübertrager Motor (32), der in die Leitung (28) eingefügt ist und von Wasser durchströmt wird, das in der Leitung (28) fließt, und dessen Heizmittelweg (34) in den Kühlmittelkreislauf des Verbrennungsmotors (36) eingefügt ist und von Kühlmittel des Verbrennungsmotors (36) durchströmt wird, und c) ein Wärmeübertrager Abgas (50), der in die Leitung (28) eingefügt ist und von in der Leitung (28) fließendem Wasser durchströmt ist, und dessen Heizmittelweg (34) mit dem Abgasrohr verbunden ist und von Abgas des Verbrennungsmotors (36) durchströmt wird. Der warme Ausgangsbereich ist mit dem Eingang der Hochdruckpumpe (48) verbunden.

## Beschreibung

Die Erfindung bezieht sich auf eine mobile Hochdruck-Reinigungsvorrichtung, die warmes Reinigungswasser mit mindestens 100 bar Druck für industrielle Reinigungsaufgaben zur Verfügung stellt. Unter warmem Wasser wird eine Temperatur von mindestens 40 °C verstanden.

Aus der DE 10 2013 000 167 A1 ist eine Hochdruck-Reinigungsvorrichtung bekannt. Unter Hochdruck wird ein Druck von mindestens 100 bar verstanden. Typischerweise verwenden Anwendungen im Bereich der Industriereinigung Drücke von über 500 bar, insbesondere von über 1000 bar, der Druckbereich kann bis 2.500 bar und darüber gehen.

Derartige Hochdruckreinigungsvorrichtungen werden typischerweise zum Reinigen von Bauteilen aus der Ölindustrie, von Industrieanlagen allgemein und im Bereich von Kraftwerken und der chemischen Industrie eingesetzt, siehe z.B. DE 43 27 602 C1.

An den Ausgang der Hochdruckpumpe ist üblicherweise ein Austrittsmittel angeschlossen, z.B. eine Lanze, eine Düse oder dergleichen. Das Austrittsmittel wird auf einen zu reinigenden Gegenstand gerichtet. Bei den hohen Arbeitsdrücken ist das manuelle Arbeiten mit einem Wasserstrahl gefährlich, deshalb werden die Mitarbeiter zumindest durch Schutzanzüge geschützt, in der Regel aber befindet sich kein Mensch im Bereich des Hochdruckstrahls. Vorzugsweise wird ein Roboter oder eine andere geeignete Vorrichtung benutzt, um den Strahl zu lenken und zu richten.

Bei einem Einsatz mobiler Hochdruck-Reinigungsvorrichtungen, auch mobile Hochdruckpumpenaggregate genannt, werden der Volumenstrom (Fördermenge) sowie der Betriebsdruck überwiegend durch die Variation der Antriebsdrehzahl des Verbrennungsmotors und damit der Hochdruckpumpe erreicht. Diese Drehzahl wird meistens durch fest- und einstellbare Handhebel/Gaszug-Kombinationen vorgegeben. Eine derartige Einstellmöglichkeit ist einfach, erfordert allerdings insbesondere bei manuellen Hochdruckreinigungsoperationen zwei Personen, um den gewünschten Betrieb gewährleisten zu können. Bei einem Wechsel des Austrittsmittels, insbesondere Düsenwechsel, muss der Druck von Hand neu eingestellt werden. Ein Verschleiß der Düsen bewirkt eine nicht unerhebliche Veränderung des Betriebsdrucks. Oftmals werden zu hohe Volumenströme erhalten, die teilweise abgeführt werden, insbesondere über ein sog. Spaltventil.

Die DE 10 2009 002 365 A1 offenbart eine mobile Hochdruckreinigungsvorrichtung, dabei ist die Hochdruckpumpenanlage auf einem Auflieger eines LKWs angeordnet, der hier als Zugmaschine ausgeführt ist. Der Verbrennungsmotor dieses LKWs treibt über eine Hydraulikpumpe einen Hydraulikmotor an, der wiederum eine Spülpumpe, eine Hochdruckpumpe und eine Vakuumpumpe antreibt. Die Erfindung zielt besonders auf, den Verbrennungsmotor außerhalb eines Ex-Gefahrenbereichs anordnen zu können. Bei den benötigten Leistungen des Verbrennungsmotors erkennen die Erfinder das Problem der Überhitzung des Motors der Zugmaschine bei fehlendem Fahrtwind und lösen es durch einen vergrößerten Kühler. Die Energieeffizienz sinkt dabei allerdings noch mehr ab. Derartige Vorrichtungen bieten nur eine geringe Pumpleistungsbreite, die dem nutzbaren Drehzahlbereich des Motors in einem bestimmten Gang geschuldet ist. Sie sind fehleranfällig, da ein Mensch den Motor des LKWs bedienen muss, um die Hydraulikpumpe, bzw. den Hydraulikmotor immer mit einer ausreichenden Energiemenge zu versorgen.

Für Reinigungsaufgaben insbesondere im Bereich der Ölindustrie ist es vorteilhaft, wenn das für die Reinigung eingesetzte Wasser warm ist, vorzugsweise eine Temperatur über Zimmertemperatur und unter dem Siedepunkt hat. Gewünscht sind die Temperaturen im Bereich von 70 bis 85, typischerweise etwa bei 80°C. Mit derart warmem Wasser kann wesentlich effektiver und schneller gereinigt werden, insbesondere Ölrückstände können gut beseitigt werden.

Es werden große Mengen an Wasser pro Zeiteinheit benötigt. Das Aufheizen dieser großen Menge ist sehr energieaufwendig. Es muss daher nach Mitteln und Wegen gesucht werden, möglichst wenig Primärenergie einsetzen zu müssen, um den Reinigungsstrahl aus Wasser auf die gewünschte Temperatur aufheizen zu können.

Bevorzugte Reinigungsflüssigkeit ist Wasser. Es können aber auch andere Reinigungsflüssigkeiten eingesetzt werden. Insbesondere kann Wasser mit Reinigungszusätzen versehen werden. Aus Kostengründen und wegen der hohen Mengen an benötigter Reinigungsflüssigkeit wird in der Regel Wasser eingesetzt. Deswegen ist Wasser das Synonym für Reinigungsflüssigkeit angegeben und benannt.

Die Hochdruckpumpen erfordern eine erhebliche Antriebsleistung. Sie kann von dem Antriebsmotor des LKWs geliefert werden. Dieser ist als Verbrennungsmotor ausgeführt. Er gibt im Betrieb eine erhebliche Wärmeleistung ab. Als Faustregel kann man davon ausgehen, dass etwa 1/3 der Motorleistung tatsächlich für den Fahrbetrieb zum Einsatz kommt, während nach dem Stand der Technik etwa 2/3 als Wärme in die Umgebung abgegeben wird.

Bei einem stehenden LKW fällt der kühlende Fahrwind weg. In der Regel werden deshalb LKW-Motoren, die für stationäre Aggregate eingesetzt werden, bei geringerer Leistung betrieben, damit die vorhandene Kühlanlage den Motor noch ausreichend kühlen kann und dieser nicht überhitzt. Die Kühlanlage gibt die Wärme an die Umgebung ab.

Bei dem Versuch, warmes Hochdruckwasser zu erzeugen, ist man nach dem Stand der Technik bislang davon ausgegangen, dass zunächst kaltes Wasser auf Hochdruck gebracht wird, das unter Hochdruck stehende Wasser wird dann erhitzt. Dadurch aber wird der Hochdruckbereich groß, es müssen viele Komponenten hochdrucksicher ausgeführt sein. Dies ist aufwendig.

Die Erfindung hat es sich zum Ziel gesetzt, eine mobile Hochdruck-Reinigungsvorrichtung anzugeben, die Antriebsleistung und Wärmeleistung des Antriebsmotors möglichst gemeinsam und günstig einsetzt und es zudem ermöglicht, im Hochdruckbereich möglichst wenige Teile anordnen zu müssen, insbesondere den Weg von der Hochdruckpumpe bis zum Austrittsmittel des Reinigungsstrahls, also insbesondere zu einer Düse, möglichst einfach und evtl. auch kurz zu gestalten.

Hiervon ausgehend ist es Aufgabe der Erfindung, eine ökonomisch arbeitende, die vorhandenen Antriebs- und Wärmeleistungen des Antriebsmotors möglichst optimal nutzende Hochdruckreinigungsanlage anzugeben, bei der eine Austrittsdüse, beispielsweise eine Hochdrucklanze, unmittelbar am Ausgang der Hochdruckpumpe angeschlossen werden kann, und die warmes Wasser in einem weiten Temperaturbereich regelbar zur Verfügung stellt.

Diese Aufgabe wird gelöst durch eine mobile Hochdruck-Reinigungsvorrichtung mit den Merkmalen des Anspruchs 1.

Der Verbrennungsmotor des Kraftfahrzeugs wird, neben dem Antrieb des Kraftfahrzeugs, zum Antrieb der Hochdruckpumpe verwendet, auf einen externen Antrieb für diese Pumpe wird verzichtet. Bei der Verwendung des Verbrennungsmotors zum Antrieb der Hochdruckpumpe wird durch ein Zwischengetriebe der Antriebsstrang zur angetriebenen Achse unterbrochen und vom Verbrennungsmotor abgekoppelt. Stattdessen wird das Drehmoment auf die Hochdruckpumpe geleitet.

Durch Nutzung der Abwärme des Verbrennungsmotors, insbesondere des Abgases und des Kühlkreislaufs, zur Erwärmung des Wassers, kann die ansonsten als Umgebungswärme verschwendete Wärmeenergie genutzt werden. Das über die Wärmeübertrager erwärmte Wasser wird durch die Wärme des zu kühlenden Motors und durch das Abgas erwärmt. Dabei können auf der thermischen Seite Energieeinsparungen von bis zu 60% erreicht werden. Gleichzeitig werden durch die Aufwärmung im Niederdruckbereich und nicht im Hochdruckbereich hinter der Hochdruckpumpe Materialkosten eingespart, da die übliche Positionierung des mindestens einen Wärmetauschers hinter der Hochdruckpumpe, bzw. in einem Kreislauf mit dieser, zu aufwändigen Lösungen mit für Hochdruck geeigneten Leitungen, Anschlüsse und den üblichen verwendeten Elementen führt.

Vorzugsweise ist eine Steuerung vorgesehen. Sie ist so ausgelegt, dass sie bei Beginn einer neuen Reinigungsarbeit den Druck am Ausgang der Hochdruckpumpe von einem niedrigeren Ausgangswert, beispielsweise Null, beginnt und danach hochregelt auf den zuvor eingestellten, gewünschten Arbeitsdruck von beispielsweise 850 bar. Die Steuerung ist mit dem Verbrennungsmotor, dem Getriebe, dem Zwischengetriebe und ggf. der Hydraulikanordnung aus Hydraulikpumpe und Hydraulikmotor verbunden. An diesen Teilen sind Sensoren angeordnet, die die Drehzahl des Verbrennungsmotors, den Gang des Getriebes und ggf. den Druck in der Hydraulikanordnung erfassen. Weiterhin sind diesen beiden Stellorgane zugeordnet, die es ermöglichen, die Drehzahl des Verbrennungsmotors zu ändern, Gänge zu schalten (falls dies nicht automatisch erfolgt) und das Zwischengetriebe zwischen seinen beiden Abgängen zu schalten.

Das Bedienpersonal muss in der vorliegenden Erfindung nur eine Vorgabe für Ausgangsdruck und Ausgangstemperatur in die Steuerung eingeben. Die Steuerung steuert dann automatisch den gesamten Prozess. Sie fährt ihn hoch und regelt die gewünschten Werte. Dabei kontrolliert sie ein normales Getriebe oder ein Doppelkupplungsgetriebe, was wiederum die Hochdruckpumpe beeinflusst, zudem steuert sie die Leistung der einzelnen Wärmeübertrager. Menschliche Bedienfehler werden so auf ein Minimum reduziert, bzw. nach der Eingabe der Daten vollkommen ausgeschlossen.

Das Aufwärmen des als Reinigungsflüssigkeit benutzten Wassers geschieht ausschließlich vor der Hochdruckpumpe. Letztere ist direkt mit einem Austrittsmittel verbunden. Der Verbrennungsmotor ist über zwei unterschiedlich ausgebildete Varianten von Getrieben mit dem Zwischengetriebe verbunden. Bei der Ausführung als Doppelkupplungsautomatikgetriebe kann auch ein Doppelkupplungsgetriebe eingesetzt werden. Ein Doppelkupplungsautomatikgetriebe hat den Vorteil, dass ein Mensch oder ein Stellorgan für das Schalten nicht erforderlich sind. Bei dem Doppelkupplungsgetriebe ist der Antriebsstrang zwischen dem Verbrennungsmotor und der Hydraulikpumpe stets geschlossen, es findet also eine stetige Antriebsverbindung statt. Auch bei Gangwechsel bleibt die Antriebsverbindung erhalten.

Bevorzugt ist im Hochdruckbereich ein Sicherheitsventil vorgesehen, das mit Druckluft aus dem Kraftfahrzeug betrieben wird. Durch den Betrieb mit Druckluft im Gegensatz zu beispielsweise elektronischem Betrieb, wird ein Funktionieren des Sicherheitsventils auch im Notfall gewährleistet.

Bevorzugt sind Sensoren zur Messung des Fluiddrucks, des Fluidvolumenstroms und der Fluidtemperatur an verschiedenen Stellen angeordnet.

Durch die Wärmeübertrager gelingt es, die thermische Leistung des Antriebsmotors weitgehend in das aufzuheizende Wasser zu überführen. Damit steigert sich der Wirkungsgrad der gesamten Anlage erheblich, denn es wird nicht nur die vom Antriebsmotor gelieferte Bewegungsenergie, die etwa 1/3 der Motorleistung ausmacht, verwendet, nämlich für dem Antrieb der Hochdruckpumpe, es wird auch seine Wärmeleistung genutzt und nicht an die Umgebung abgegeben. Letzteres ist im Stand der Technik, siehe DE 10 2009 002 365 A1, bekannt. Ein Großteil der Heizleistung kann aus dem System erhalten werden, der Anteil liegt über 50%, typischerweise bei etwa 70%.

Die Verbrennungsmotoren liegen in einem Leistungsbereich von mindestens 100, insbesondere zumindest 150 KW. Die obere Grenze ist offen, sie liegt üblicherweise bei etwa 500 bis 600 KW. Der Motor wird nicht ständig bei Volllast betrieben, vielmehr bei etwa 70 bis 80% Vorlast. Die anzutreibenden HD-Pumpen liegen daher im Bereich bis maximal etwa 410 KW.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das im Folgenden unter Bezugnahme auf die Zeichnung näher erläutert wird. In dieser Zeichnung zeigen:
- Fig. 1:: Eine prinzipielle Darstellung der Vorrichtung,
- Fig. 2:: eine schematische Ansicht eines Antriebsstrangs mit einem Doppelkupplungsautomatikgetriebe und einem Zwischengetriebe, und
- Fig. 3:: eine schematische Ansicht ähnlich Fig. 2, jedoch nun mit einem automatischen Schaltgetriebe und mit einer Hydraulikpumpe und einem Hyraulikmotor hinter dem Zwischengetriebe, jeweils in prinzipieller Darstellung.

Über einen genormten Anschluss 20 wird Wasser aus einem Netz oder einem anderen geeigneten Vorrat entnommen. Dahinter ist ein Absperrventil angeordnet, es wird gefolgt von einem Grobfilter 22, das insbesondere alle Teilchen oberhalb 25 µm zurückhält. Das Grobfilter 22 wird mit einem Sensor auf Differenzdruck überwacht. Vorteilhaft ist eine Entsalzungsanlage 24, durch sie kann die Kalkausfällung begrenzt werden. Das primäre Wasser wird anschließend in einem Tank 26 gespeichert. In der Regel ist der Tank 26 drucklos, er kann aber auch als Drucktank, beispielsweise bis maximal 6 bis 7 bar, ausgeführt sein.

Der Tank 26 dient als Puffer in der Vorrichtung. Wenn beispielsweise eine Notabschaltung erforderlich ist, muss die im System vorhandene Wärme noch entnommen werden können. Hierzu ist im Tank 26 stets genug Wasser vorhanden. Das Niveau im Tank wird entsprechend überwacht.

Aus dem Tank 26 wird das Wasser über eine Leitung 28 entnommen. In diese sind mehrere Vorrichtungen eingefügt, die im Folgenden im Einzelnen beschrieben werden. Zunächst ist eine Vordruckpumpe 30 vorgesehen, sie liefert einen Ausgangsdruck von etwa 6 bis 7 bar. Hinter der Vordruckpumpe 30 beginnt der Niederdruckbereich, er hat vorzugsweise einen Druck von 2 bis 10 bar.

Anschließend an die Vordruckpumpe 30 strömt das Wasser der Leitung 28 in einen Primärweg eines Wärmeübertragers Motor 32. Dieser Wärmeübertrager Motor 32 hat einen Heizmittelweg 34, dieser ist in den Kühlmittelkreislauf des Verbrennungsmotors 36 eingefügt. Der Wärmeübertrager Motor 32 hat z.B. eine Leistung von 400 KW. Der Verbrennungsmotor 36 ist schematisch außerhalb des LKWs 38 dargestellt. Dies dient der einfacheren Verständlichkeit der Darstellung.

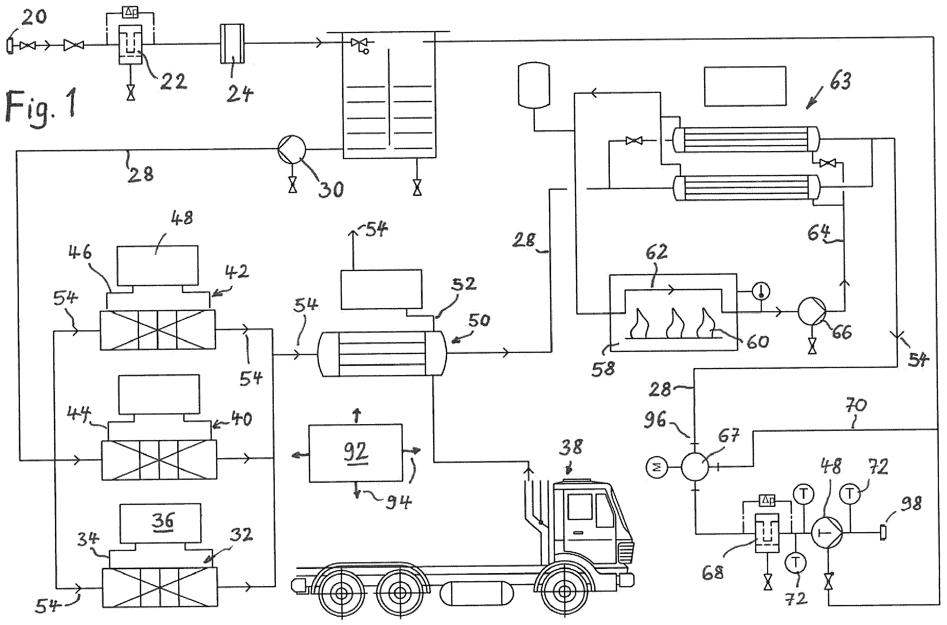

Parallel zum Wärmeübertrager Motor 32 können noch weitere Wärmeübertrager vorgesehen sein und einzeln zugeschaltet werden. In Figur 1 sind noch ein Wärmeübertrager Hydraulik 40 und ein Wärmeübertrager HD-Pumpe 42 vorgesehen. Auch ihre Primärkreisläufe werden vom Wasser in der Leitung 28 durchströmt, die Pfeile 54 sind in Figur 1 eingezeichnet. Ein Heizmittelweg 44 des Wärmeübertragers Hydraulik 40 wird von einem Kühlkreislauf einer Hydraulikvorrichtung, beispielsweise eines hydraulischen Getriebes des LKWs 38, durchströmt. Der Wärmeübertrager HD-Pumpe 42 hat ebenfalls einen Heizmittelweg 46, der von einem Kühlkreislauf für die Hochdruckpumpe 48 durchströmt wird. Diese Hochdruckpumpe 48, (auch HD-Pumpe) genannt, ist links in Figur 1 schematisch dargestellt, sie ist in der rechten unteren Ecke noch einmal als Pumpe dargestellt.

Nach Durchlaufen des Primärkreislaufes des Wärmeübertragers Motor 32 und ggf. der zusätzlich vorgesehenen Primärkreisläufe führt die Leitung 28 zu einem Wärmeübertrager Abgas 50. In seinen Primärweg ist die Leitung 28 eingefügt, der Primärweg wird von in dieser Leitung 28 fließendem Wasser durchströmt. Sein Heizmittelweg 52 wird vom Abgas des Verbrennungsmotors 36 durchströmt. Hierzu hat die Auspuffanlage des Verbrennungsmotors 36 eine Klappe, die das Abgas entweder in die Umwelt oder in eine Vorleitung strömen lässt, welche mit dem Heizmittelweg 52 verbunden ist. Das im Wärmeübertrager Abgas 50 gekühlte Abgas wird am Ausgang des Heizmittelweg 52 in die Umwelt abgegeben, siehe Pfeil 54.

Nach Durchlaufen des Wärmeübertragers Abgas 50 ist das in der Leitung 28 strömende Wasser erhitzt worden, z.B um 20 bis 55 °C. Um es noch weiter zu erhitzen, kann es noch eine Zusatzheizvorrichtung 56 durchlaufen. Diese ist aufgebaut wie eine herkömmliche Zentralheizung eines Hauses. Die Heizleistung der Zusatzheizvorrichtung 56 beträgt z.B. 1 MW. Sie hat einen Heizkessel 58, in dem ein Brennstoff verbrannt wird, beispielsweise Gas, dies ist durch Flammen 60 angedeutet. Im Heizkessel 58 befindet sich eine Wärmeschlange 62. Sie kann in einer hier nicht dargestellten Ausbildung direkt; also unmittelbar von dem Wasser der Leitung 28 durchströmt sein, sie ist dann in die Leitung 28 eingefügt. Im gezeigten Ausführungsbeispiel ist sie indirekt eingefügt, es ist noch ein Wärmeübertrager Heizung 63 dazwischengeschaltet. Er hat einen primären Kreislauf 64, zu dem die Wärmeschlange 62 gehört. Eine Zirkulationspumpe 66 ist in den primären Kreislauf 64 eingefügt. Gezeigt sind zwei parallel geschaltete Wärmetauscher Heizung 63. Durch Ventile kann nur einer dieser beiden Wärmeübertrager eingeschaltet sein, gesteuert von einer Steuerung 92. Es können aber auch beide parallel betrieben werden. Im oberen Wärmetauscher Heizung ist ein Ventil in der Leitung 28 und ein Ventil im primären Kreislauf 64 für dessen Abschalten vorgesehen.

Der Heizmittelweg dieser Wärmetauscher ist in die Leitung 28 eingefügt. Am Ausgang der Zusatzheizvorrichtung 56 steht Wasser der gewünschten Temperatur, beispielsweise 80°C, zur Verfügung. Es wird über die Leitung 28 (siehe Pfeil) einer Weiche 67 zugeleitet, die motorisch betrieben ist. Vorzugsweise kann sie in den beliebigen Zwischenstellungen positioniert werden. In einer Endstellung wird das gesamte Wasser aus der Leitung 28 über ein Feinfilter 68 der Hochdruckpumpe 48 zugeleitet. In der anderen Endstellung ist die Weiche 67 mit einer Rückführleitung 70 verbunden, die im Tank 26 endet. In diesem Zustand kann beispielsweise die Anlage abgekühlt werden. Es kann die thermische Energie aus den Wärmeübertragern abgeführt werden.

Die Hochdruckpumpe 48 ist in Antriebsverbindung mit dem Verbrennungsmotor 36. Die Antriebsverbindung kann mechanisch, insbesondere über ein Doppelkupplungsgetriebe, oder hydraulisch über ein hydraulisches Getriebe, erfolgen. Es ist eine Umschaltung zwischen normalem Fahrbetrieb, bei dem die Antriebsleistung für die Bewegung des LKWs genutzt wird und den Reinigungsbetrieb vorgesehen. Im letzteren Fall wird die Antriebsenergie auf die Hochdruckpumpe 48 übergeleitet.

Am Ausgang der Hochdruckpumpe 48 liegt heißes Wasser mit einem Druck von beispielsweise 1200 bar vor. Hinter der Hochdruckpumpe 48 beginnt der Hochdruckbereich. Über Temperatursensoren 72 wird die Temperatur des Wassers vor und hinter der Hochdruckpumpe 48 erfasst. Am Ausgang der Hochdruckpumpe 48 kann ein Austrittsmittel 98 wie z.B. eine Lanze, eine Düse oder dergleichen (nicht dargestellt) angeschlossen werden. Es werden Vorrichtungen nach dem Stand der Technik eingesetzt.

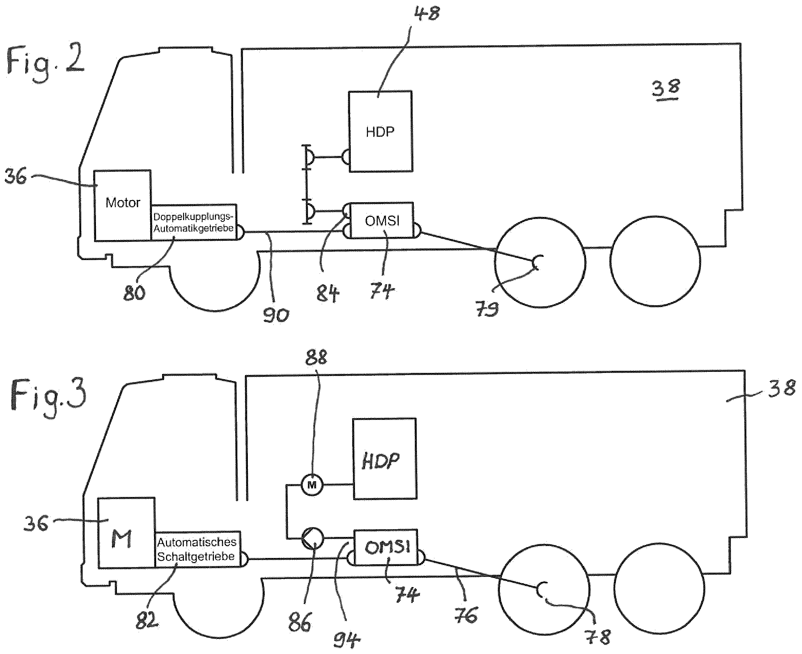

Aus den Figuren 2 und 3 sind zwei unterschiedliche Antriebssysteme ersichtlich, die sich für die Erfindung eignen. Sie weisen - in dieser Reihenfolge - jeweils einen Verbrennungsmotor 36, ein Zwischengetriebe 74 und die Hochdruckpumpe 48. Das Zwischengetriebe 74 hat eine Abtriebsseite. Von dort gehen einerseits eine Antriebswelle 76, die mit zumindest einer angetriebenen Hinterachse 78 verbunden ist, und andererseits an einem zweiten Ausgang 84 eine Welle aus.

In der Ausführung gemäß Figur 2 ist zwischen dem Verbrennungsmotor 36 und dem Zwischengetriebe 74 ein Doppelkupplungs-Automatikgetriebe 80 angeordnet. Der Verbrennungsmotor 36 ist mit dem Doppelkupplungs-Automatikgetriebe 80 in Antriebsverbindung, letzteres ist über eine Eingangswelle 90 mit dem Zwischengetriebe 74 verbunden. Die Hochdruckpumpe 48 ist direkt an den zweiten Ausgang 84 des Zwischengetriebes 74 angeschlossen.

Bei der Ausbildung gemäß Figur 3 ist an der Stelle des Doppelkupplungs-Automatikgetriebes 80 ein automatisches Schaltgetriebe 82 vorgesehen. Zudem ist am zweiten Ausgang 84 des Zwischengetriebes 76 eine hydraulische Pumpe 86 angeschlossen, deren Ausgang mit einem Hydraulikmotor 88 verbunden ist. Dessen Ausgangswelle treibt die Hochdruckpumpe 48 an.

Als Zwischengetriebe 74 werden z.B. sogenannte OMSI-Getriebe eingesetzt, hierzu wird auf die US 6,393,944 B1 verwiesen. Ein Zwischengetriebe 74 ermöglicht es, an einer Eingangswelle 90 anliegende Drehmomente wahlweise auf die Antriebswelle 76 oder den zweiten Ausgang 84 zu leiten.

Bei der Ausführung nach Figur 2 tritt keine Antriebsunterbrechung während eines Schaltens des Getriebes 80, 82 auf. Das Antriebsmoment des Verbrennungsmotors 36 ist auch während des Schaltens ununterbrochen vorhanden. Es liegt stetig an der Hochdruckpumpe 48 an. Damit kann der Verbrennungsmotor 36 nicht nur in einem einzelnen Gang, sondern in allen Gängen, die das Doppelkupplungs-Automatikgetriebe 80 vorsieht, benutzt und verwendet werden.

In der Ausführung nach Figur 3 ist ein automatisches Schaltgetriebe 82 vorteilhaft, es kann aber auch ein normales Schaltgetriebe vorgesehen sein. Bei beiden tritt eine gewisse Drehmomentunterbrechung während eines Schaltvorgangs auf. Diese wird ausgeglichen durch die Anordnung aus hydraulischer Pumpe 86 und Hydraulikmotor 88, die zwischen dem Zwischengetriebe 74 und der Hochdruckpumpe 48 vorgesehen ist. Auch in diesem Fall kann das Schaltgetriebe 82 während eines Hochdruck-Reinigungsvorgangs betätigt werden.

Es gelingt auf diese Weise, die Hochdruckpumpe in einer Bandbreite von beispielsweise 250 bis 1800 U/min antreiben zu können. Dadurch kann der geförderte Volumenstrom in einem Verhältnis größer 1:12 verändert werden, ohne die Vorrichtung anhalten zu müssen, dies bei einem vorgegebenen Hochdruck.

Ein Reinigungsvorgang beginnt damit, dass der für den Reinigungsvorgang benötigte Druck eingestellt wird. Eine Vorgabe des Volumenstroms ist nicht mehr notwendig. Der benötigte Druck ist abhängig von der jeweils gewählten Düse. Die Anlage fährt den Druck immer von unten nach oben, bis zu einem eingestellten, gewünschten Druck hoch. Eine Ableitung von Überschuss-Wasser über eine Bypassleitung, wie beispielsweise mittels einer Spaltdüse, ist nicht mehr notwendig. Es wird jeweils nur diejenige Wassermenge in der Hochdruckpumpe 48 verdichtet, die auch tatsächlich durch eine Düse nach außen tritt und auf den zu reinigenden Gegenstand gerichtet wird.

Vorteilhafterweise sind zwei hydraulische Pumpen 86 vorgesehen. Wenn nicht die volle Leistung benötigt wird, wird nur eine hydraulische Pumpe 86 benutzt, um die Hochdruckpumpe 48 anzutreiben.

Insgesamt werden weniger Eingaben vom Bedienungspersonal benötigt. Dadurch aber werden auch Fehlermöglichkeiten verringert. Der Reinigungsvorgang läuft weitgehend selbständig geregelt ab, ohne dass das Bedienungspersonal sich über den benötigten Druck und zugleich den Volumenstrom Gedanken machen muss.

Insbesondere am Anfang eines Reinigungsvorgangs ist es vorteilhaft, wenn der Druck am Ausgang der Hochdruckpumpe 38 langsam hochgefahren wird, weil dann nicht ein abrupter Druckstoß an einer Düse auftreten kann.

Die zentrale Steuerung 92 ist mit einer Vielzahl von Sensoren verbunden, die an den einzelnen der o.g. genannten Bauteile der Vorrichtung angeordnet sind und mindestens einen Zustand aller beschriebenen Bauteile einzeln abfragen, siehe Steuerleitungen 94. Einige dieser Sensoren sind dargestellt, beispielsweise die Temperatursensoren 72. Die Wärmeübertrager haben mehrere Temperatursensoren, die beispielsweise die Eingangstemperatur und die Ausgangstemperatur in der Leitung 28 erfassen. Die Steuerung ist mit Sensoren im Verbrennungsmotor 36 verbunden und erhält Information über die Drehzahl. Sie ist weiterhin mit dem Getriebe 80 bzw. 82 verbunden. Der Druck auf der Ausgangsseite der Hochdruckpumpe, also am warmen Ausgangsbereich 96, wird erfasst und liegt an der Steuerung 92 als Wert an. Dadurch ist die Steuerung 92 in der Lage, in jeden einzelnen Schritt einzugreifen und jedes einzelne Bauteil zu erfassen und zu steuern, also die Gesamtanlage zu steuern.

Den einzelnen o.g. Bauteilen der Vorrichtung sind Stellorgane (nicht dargestellt) zugeordnet, die Ventile verstellen, den Verbrennungsmotor 36 steuern, in der Lage sind, den jeweils von der Steuerung 92 ausgewählten Gang zu wählen und eine Notabschaltung vorzunehmen. Sie sind über Steuerleitungen 94 an die Steuerung 92 angeschlossen.

Der Verbrennungsmotor 36 wird bei der für ihn optimalen Drehzahl betrieben, beispielsweise 1.100 bis 1.200 U/min. Die Steuerung 92 bzw. die Automatik wählt den jeweils günstigsten Gang des Getriebes 80 bzw. 82 für die Reinigungsaufgabe. Der Gang wird vorzugsweise so ausgewählt, dass die Drehzahl von z.B. ca. 1150 U/min während der Reinigungsaufgabe erhalten bleibt.

Die mobile Hochdruck-Reinigungsvorrichtung mit einem LKW 38, der einen Verbrennungsmotor 36 mit Kühlmittelkreislauf und Abgasleitung, mit einer Hochdruckpumpe 48, die über eine schaltbare Übertragungsvorrichtung in Antriebsverbindung mit dem Verbrennungsmotor 36 ist, hat eine Wasseranlage, die einen Eingangsbereich und den warmen Ausgangsbereich 96 aufweist, zwischen denen angeordnet sind a) eine Leitung 28 für Wasser, b) ein Wärmeübertrager Motor 32, der in die Leitung 28 eingefügt ist und von Wasser durchströmt wird, das in der Leitung 28 fließt, und dessen Heizmittelweg 34 in den Kühlmittelkreislauf des Verbrennungsmotors 36 eingefügt ist und von Kühlmittel des Verbrennungsmotors 36 durchströmt wird, und c) ein Wärmeübertrager Abgas 50, der in die Leitung 28 eingefügt ist und von in der Leitung 28 fließendem Wasser durchströmt ist, und dessen Heizmittelweg 34 mit dem Abgasrohr verbunden ist und von Abgas des Verbrennungsmotors 36 durchströmt wird. Der warme Ausgangsbereich 96 ist mit dem Eingang der Hochdruckpumpe 48 verbunden. Die Bauteile 20 bis 26 bilden den kalten Eingangsbereich.

Der Offenbarungsgehalt der am gleichen Anmeldetag von der Anmelderin eingereichten Anmeldung mit dem Titel "Mobile Hochdruck-Reinigungsvorrichtung mit schaltbarem Getriebe" gehört mit zum Offenbarungsgehalt der vorliegenden Anmeldung.

### Bezugszeichenliste

- 20: Anschluss
- 22: Gobfilter
- 24: Entsalzungsanlage
- 26: Tank
- 28: Leitung
- 30: Vordruckpumpe
- 32: Wärmeübertrager Motor
- 34: 1. Heizmittelweg
- 36: Verbrennungsmotor
- 38: LKW
- 40: Wärmeübertrager Hydraulik
- 42: Wärmeübertrager HD-Pumpe
- 44: 2. Heizmittelweg
- 46: 3. Heizmittelweg
- 48: Hochdruckpumpe
- 50: Wärmeübertrager Abgas
- 52: 4. Heizmittelweg
- 54: Pfeil
- 56: Zusatzheizvorrichtung
- 58: Heizkessel
- 60: Flamme
- 62: Wärmeschlange
- 64: primärer Kreislauf
- 66: Zirkulationspumpe
- 67: Weiche
- 68: Feinfilter
- 69: Wärmeübertrager Heizung
- 70: Rückführleitung
- 72: Temperatursensor
- 74: Zwischengetriebe
- 76: Antriebswelle
- 78: Achse
- 80: Doppelkupplung-Automatikgetriebe
- 82: Automatisches Schaltgetriebe
- 84: Zweiter Ausgang
- 86: hydraulische Pumpe
- 88: Hydraulikmotor
- 90: Eingangswelle
- 92: Steuerung
- 94: Steuerleitung
- 96: Ausgangsbereich
- 98: Austrittsmittel

## Patentansprüche

1. Mobile Hochdruck-Reinigungsvorrichtung mit einem LKW (38), der einen Verbrennungsmotor (36) als Antriebsmotor hat, welcher einen Kühlmittelkreislauf, in dem sich ein Kühlmittel befindet und eine Abgasleitung aufweist, mit einer Hochdruckpumpe (48) für Wasser, die über eine schaltbare Übertragungsvorrichtung in Antriebsverbindung mit dem Verbrennungsmotor (36) ist, und mit einer Wasseranlage, die einen kalten Eingangsbereich und einen warmen Ausgangsbereich (96) aufweist, zwischen denen angeordnet sind
a) eine Leitung (28) für Wasser,
b) ein Wärmeübertrager Motor (32), der einen Primärweg aufweist, der in die Leitung (28) eingefügt ist und von Wasser durchströmt wird, das in der Leitung (28) fließt, und dessen Heizmittelweg (34) in den Kühlmittelkreislauf des Verbrennungsmotors (36) eingefügt ist und von Kühlmittel des Verbrennungsmotors (36) durchströmt wird,
c) ein Wärmeübertrager Abgas (50), der einen Primärweg aufweist, welcher in die Leitung (28) eingefügt ist und der von in der Leitung (28) fließendem Wasser durchströmt ist, und dessen Heizmittelweg (52) mit dem Abgasrohr verbunden ist und von Abgas des Verbrennungsmotors (36) durchströmt wird,
d) ggf. eine Zusatzheizvorrichtung (56), die einen Heizkessel (58) mit Wärmeschlange (62) aufweist, die Wärmeschlange (62) ist direkt oder indirekt in die Leitung (28) eingefügt und wird direkt oder indirekt von Wasser durchströmt wird, das in der Leitung (28) fließt,
der warme Ausgangsbereich (96) ist mit dem Eingang der Hochdruckpumpe (48) verbunden, in den Eingangsbereich wird Wasser eingespeist, vorzugsweise ist der Eingangsbereich mit einem Tank (26) verbunden, in dem sich Wasser befindet.

2. Reinigungsvorrichtung nach Anspruch 1, **dadurch gekennzeichnet, dass** der Wärmeübertrager Motor (32), der Wärmeübertrager Abgas (50) und die Wärmeschlange (62) der Zusatzheizvorrichtung (56) in Serie hintereinander angeordnet sind, und dass vorzugsweise der Ausgang der Wärmeschlange (62) den warmen Ausgangsbereich (96) bildet.

3. Reinigungsvorrichtung nach einem der vorangegangenen Ansprüche, **dadurch gekennzeichnet, dass** dann, wenn die Zusatzheizvorrichtung (56) vorhanden ist, der Ausgang der Wärmeschlange (62) direkt oder indirekt den warmen Ausgangsbereich (96) bildet, und dass, wenn die Zusatzheizvorrichtung (56) nicht vorhanden oder nicht aktiv ist, der Ausgang des Wärmeübertragers Abgas den warmen Ausgangsbereich (96) bildet.

4. Reinigungsvorrichtung nach einem der vorangegangenen Ansprüche, **dadurch gekennzeichnet, dass** die Hochdruckpumpe (48) eine Kühlvorrichtung aufweist, die von Kühlwasser durchströmt ist, dass ein Wärmeübertrager HD-Pumpe (42) vorgesehen ist, der einen Primärweg aufweist, welcher in die Leitung (28) eingefügt ist und von in der Leitung (28) fließendem Wasser durchströmt wird, und dass der Wärmeübertrager HD-Pumpe (42) einen Heizmittelweg (34) aufweist, der von dem Kühlwasser durchströmt wird und der an den Kühlkreislauf der Hochdruckpumpe (48) angeschlossen ist.

5. Reinigungsvorrichtung nach einem der vorangegangenen Ansprüche, **dadurch gekennzeichnet, dass** die Übertragungsvorrichtung eine Hydraulikvorrichtung aufweist, dass der Hydraulikvorrichtung ein Ölkühlkreislauf zugeordnet ist, in dem Kühlflüssigkeit zirkuliert, dass ein Wärmeübertrager Hydraulik (40) vorgesehen ist, der einen Primärweg aufweist, welcher in die Leitung (28) eingefügt ist und dessen Heizmittelweg (34) in den Ölkühlkreislauf eingefügt ist.

6. Reinigungsvorrichtung nach einem der vorangegangenen Ansprüche, **dadurch gekennzeichnet, dass** der Verbrennungsmotor (36) über ein Zwischengetriebe (74) entweder (Fall a) über eine Antriebswelle (76) mit mindestens einer angetriebenen Achse (78) verbunden ist oder (Fall b) mit der Hochdruckpumpe (48) verbunden ist, wobei im Fall a der Verbrennungsmotor (36) über ein Doppelkupplungs-Automatikgetriebe (80) mit dem Zwischengetriebe (74) verbunden ist und ein zweiter Ausgang (84) des Zwischengetriebes direkt mit der Hochdruckpumpe (48) verbunden ist und im Fall b) der Verbrennungsmotor (36) über ein automatisches Schaltgetriebe (82) mit dem Zwischengetriebe (74) verbunden ist und der zweite Ausgang (84) des Zwischengetriebes (74) über eine hydraulische Pumpe (86) und einen von dieser angetriebenen Hydraulikmotor (88) verbunden ist, der wiederum mit der Hochdruckpumpe (48) in Antriebsverbindung ist.

7. Reinigungsvorrichtung nach einem der vorangegangenen Ansprüche, **dadurch gekennzeichnet, dass** sie weiterhin eine Steuerung (92) aufweist, dass Sensoren (72) vorgesehen sind, die Temperatur, Druck, Strömung und/oder die Drehzahl erfassen und dem mindestens einen Wärmeübertrager, den Getrieben (80, 82) und der Hochdruckpumpe (48) zugeordnet sind, dass die Sensoren (72) Daten der ihnen jeweils zugeordneten Bauteile erfassen und der Steuerung (92) übermitteln, die diese Daten verarbeitet und Befehle erzeugt, die über geeignete Stellvorrichtungen die Durchflüsse durch den mindestens einen Wärmeübertrager, die Umdrehungszahl des Verbrennungsmotors (36), die Auswahl des Gangs im Getriebe (80, 82) vorgibt.

8. Reinigungsvorrichtung nach einem der vorangegangenen Ansprüche, **dadurch gekennzeichnet, dass** die Vorrichtungen zur Erhitzung des Wassers, wozu die Wärmeübertrager und die Wärmeschlange (62) gehören, vor der Hochdruckpumpe (48) angeordnet sind
